# EUROPEAN PATENT SPECIFICATION

(11) **EP 0 461 350 B1**
(45) Date of publication and mention of the grant of the patent: **28.09.1994**
(21) Application number: 91104200.0
(22) Date of filing: 19.03.1991
(51) Int. Cl.: A23L 1/182

(54) **Improved method for rice food**
Verbessertes Verfahren für Reisspeisen
Méthode améliorée pour aliment à base de riz

(30) Priority: 12.06.1990 CN 90104275
(43) Date of publication of application: 18.12.1991
(73) Proprietor: Sun, Xiuai, Xi'an, Shanxi Province (CN)
(72) Inventor: Sun, Xiuai, Xi'an, Shanxi Province (CN)
(74) Representative: UEXKÜLL & STOLBERG

(56) References cited:
- FR-A- 2 614 508
- GB-A- 2 184 932
- US-A- 3 711 295
- US-A- 4 166 868
- Patent Abstracts of Japan, unexamined applications, C field, vol. 10, no. 345, Nov. 20, 1986; The PATENT OFFICE JAPANESE GOVERNMENT

## Description

This invention relates to a kind of rice food, more particularly, relates to a kind of fried food containing mainly of rice and a process for making the same.

Rice food occupies an important place in the Chinese traditional diet, especially those dishes made from rice possess characteristic style, for example, dishes made from cooked rice crust. The method for such kind of food is as follows: washed rice boils in a pot, then rice crust is taken out from the pot bottom. After air-dried and shaped into definite form, it is fried in hot oil, finally seasoning sauce is poured on-to the fried rice crust to give the finished product. But such a method for rice crust is of no practical value industrially. Because (A). rice crust made from boiled rice requires a lot of raw material and the yield is very low, in other words, this kind of rice crust is only a by-product of staple food of boiled rice, so it is only suitable for use in small amount for cooking dishes and is not practical for use in large scale industrial production: (B). the boiled rice crust becomes very brittle after frying and the binding between the grains of rice is also very loose, which is easy to separate. This makes the packaging and transportation very difficult. In addition, the instant the rice crust is added with seasoning sauce, it must be eaten otherwise it will lose its characteristic style, hence, it is only limited to cook the dishes in small amount over a very long period of time.

Chinese patent No. 87106199 discloses a method for making a rice crust mainly including washing rice, steaming, blending, pressing, frying, spraying with seasoning sauce and packaging. By which, a rice crust composed of rice, starch, edible oil and seasoning is produced. Owing to the simplicity of raw material, the taste variety of this food is very narrow, also the nutritional composition is rather simple. During the said blending, as raw starch is mixed with cooked rice and pressed into pieces, water absorbed in the starch is not enough, so the starch can not be gelatinized fully during frying, this makes the oral feeling of the fried product rather hard so as not to be suitable for those people with difficulty in chewing to eat, especially for old people. In addition, for the sake of solving crisp problem, bulking agent is added, but with the presence of 1% starch, small amount of bulking agnet can not be mixed evenly. The result is that the fried product does not become uniform in fragility. During the above processing technology, seasoning sauce is spraying on finally, this will make the seasoning sauce not uniformly distributed on the fried product, which not only affects the appearance of the product, but also the consumers feel that the seasoning is not uniform, sometimes salty and sometimes tasteless.

This makes the characteristic style of the product as a whole is not good.

US-A-4 166 868 discloses a method for manufacturing a rice product which can be made ready to eat in a few minutes after mixing it with hot water.

In order to overcome the difficiency of the prior art, the object of the present invention is to provide a kind of fried food with multiple nutritional components and different tastes, such a food possesses uniform crispness, adequate mouthfeel and the traditional rice flavour.

Another object of the present invention is to provide an improved process for fried rice food. The present process will enhance and /or improve the fragility of the said fried food, and make its taste more uniform and improve the colour of the product.

The object of the present invention is achieved through the following way. An improved method for a kind of food containing mainly of rice grains comprises pretreating raw material in order to elimitate the impurities, skins, kernels and deteriorated parts therein; steaming said raw material added with certain amount of seasonings to make a ripened rice in ratio of rice liquid being 1:1-1.5; blending appropriate amount of bulking agent with said ripened rice; shaping said ripened rice; frying shaped rice pieces at least twice times at different temperatures, the first frying temperature is in the range of 150 to 180°C and the second frying temperature is in the range of 180 to 250°C, to produce fried food with multiple nutritional components described in the present invention.

By using the improved method of this invention, the food produced possesses the following advantages:
Although the main raw material used is rice grains, but owing to the addition of auxilliary material with high nutritional value, such as beans with high protein content, vegetables, fruits, milk products etc. and vitamins and trace elements, the variety of fried food is greatly broadened and nutritional components of the food increase according to the present invention.

The fried food produced according to the method of present invention can still maintain the profile of rice granules. In particular, sugar and edible oil added during blending can greatly improve the color and mouth feel of the final product.

According to the present invention, seasonings added at the time of blending make the taste of the final product more even.

According to the present invention, no starch is added during blending of rice, hence the hardness of the product is reduced substantially and the crispness is improved greatly.

The present invention uses a frying method at least twice times, which minimizes the phnomenan of soft inside and charming outside. In addition, it greatly improves the crispness of the product.

According to the present invention, the use of finely powdered seasoning material improves the color of the product. The appearance of the product is more satisfied and the quality of the product is enhanced.

According to the method of present invention, the fried rice food produced possesses not only the crispness and flavour of the traditional Chinese fried food, but also can be used as a dish during drinking or in cooking dishes. Moreover, it possesses another characteristi,c that is, it may be eaten instantly.

The raw material used in the present invention is one or more components selected from the group consisting of:
Rice grains, for example, rice corn, glutinous rice, millet or foxtail millet, sorghum, jobstears seed, black rice, husked sorghum and the like and the mixtures thereof.
Beans, for example, hyacinth bean, red bean, green bean, and the liked bean paste thereof and the mixtures thereof.
Fruits, nuts and their products, for example, banana, jujube, longan flesh, leechee flesh, walnut, peanut, seasame, lotus seed and the like and the mixtures thereof.

Vegetables, for exmaple, spinach, radish, fungus, such as, mushroom, jew's ear and the like and the mixtures thereof.

Poultry, egg and animal meat, for example, hen egg, chicken meat, beef, fish flesh and the like and the mixtures thereof.

Vitamins and trace elements can be also used in the present invention.

The seasonings used in the present invention include any kind of natural or synthetic seasonings, for example, salt, sugar, honey, wine, beef extract, ginger, curry, prickleyash, hot pepper, aniseed, clove, cumin and the mixtures thereof and sodium glutamate. The seasonings should be formulated in order to cater for the tastes of different throngs. They may be formulated to stress one single characteristic taste, e.g., numb and hot (pungent), cumin, or may also be formulated into multiple tastes or strange style taste by using several seasonings.

The edible oils used in the present invention include any kind of edible oil which is suitable for frying, for example, peanut oil, soyabean oil, rapeseed oil, hydrogenated oil, cottonseed oil, palm oil and the like.

According the present invention, the detailed procedure of the present invention is given as follows:
1. Raw material treatment: all row meterial used should be pre-treated in order to eliminate the impurities, skins, kernels, deteriorated parts to fit the requirements of the present invention, for example, rice should be washed and sand eliminated; sesame should be roasted; animal meat should be washed and ground; large kernels like peanut, walnut should be crushed; vegetables should be washed and shredded; large jujube should be steamed, kernels eliminated and deskined etc..
2. Material blending: The raw material described in the present invention are steamed firstly into different kinds of steamed rice, the amount of liquid added during steaming is 1:1-1.5 rice: liquid w/w,here the said liquid refers to water, milk, e.g., cow's milk, sheep's milk and milk prepared from powered milk, extracted liquid from food, e.g., meat broth, fish gravy, tea, vegetable juice, fruit juice. Said milk or food extractes can enhance not only the nutritional value, but also can improve the tastes and the characteristics of the steamed product. In addition, amount of 0.1-2% honey or sugar, 0.1-5 % edible oil and 0.01-2% salt by weight should be added to the raw material. Adding edibe oil to the raw material may enhance the crispness of the final product and prevent the steamed material from caking. Hence it is advantageous to mix with bulking agent uniformly in the next step. By adding sugar to the raw material, the colour of the fried product may become more even and bright in yellowish shade so as to enhance and improve the characteristic rice flavour of the present invention.
   One aspect should be in emphasis that blending with the seasonings described in the present invention should be in accordance with the different tastes required. The seasonings described in the present invention should be added in finely powdered form, that is, the size of the particles of the seasonings should be in the range of 50-500 »m.
3. Cooking: The mixture obtained from the above blending process is steamed in a vessel for 10-30 min. under 0.5-1.5 atm. pressure, a ripened mixture is obtained.
   In addition, before blending processing, the raw material may also be cleaned, and impregnated with milk, food extract and seasoning liquid described in the present invention at 20-30°C for at least 30-40 min., scooped out and dripped off the water, put into the above mentioned liquid for blending. The ratio of raw material and liquid for the impregnation is 1: 0.5-1. The blended material then is steamed under 0.5-1.5 Kg pressure for 10-30 min. to obtain the ripened mixture of raw material.
4. Blending of rice: the ripened raw material mixture is cooled to 10-40°C, and mixed with appropriate quantity of bulking agent only, without adding any starch, e.g., potato powder, corn starch, Chinese yam powder. It is because that after the starch is mixed into the raw material, the amount of water absorbed by the starch is very small and it is not easy to mix uniformly. During frying, the starch can not be completely gelatinized, in contrast, it will become hard so as to influence the crispness of the product.
5. Shaping: The well-blended material as mentioned above is put into a twins rol ler press to form a 0.5-2.5mm thick belt, said belt is cut into a lot of blank pieces in a required shape and size. The said material can be also pressed into any shape of piece using the method well known by those skilled in the art.
6. frying: The present invention employs "at least frying twice method" to fry the blanks thoroughly until they are crisp both inside and outside. That is, after the blanks are shaped at first time, they are put into hot edible oil mentioned in the present invention at 150-180 °C immediately for friyng for 1-3min.. When the blanks float up and their color change to slight yellowish, scooping it out and carring out second frying immediately at 180-250°C for 1-3 min.. Until the color of blanks exhibits yellow as required, scooping out and dripping off oil. This "at least frying twice method" used in the present invention overcomes the phenonmenan of bubbling on the surface of the blanks, which often appears in the continuous frying at the high temperature. The present method settles a series of problems of product quality, such as undercooking inside and charring outside, and insufficient crispness.
7. Seasoning: For the sake of further enhancing the flavour of the product, the seasonings are applied directly on the fried blanks, especially the sodium glutamate, to produce final product described in the present invention. Because the seasoning materials preadimixed into the blanks mostly contain fragrant components, so a part of flavour will volatize during frying procedure. Hence, in order to maintain the flavour, it is necessary to replenish some seasonings after frying process. Thus, the formulation of the seasoning should take into account the loss of added seasoning and the sodium glutamate not added yet.

In addition, some vitamins and trace elements required by the human body may also be added directly during this process.

This invention will be further explained, in the examples below,

### Example 1

1 Kg washed rice, 1 Kg water, 20g palm oil, 5 g salt, 10 g granulated sugar and appropriate amount of seasoning materials, e.g., cumin were mixed thoroughly to form a mixture, then it was put into a steaming tray and being steamed at 1 Kg pressure for 20 min. the steamed rice was taken out and cooled to 15°C. Appropriate amount of bulking agent was added. After blending, the mixture material was pressed into 1.2mm thick belt which then was cut into 20x25 mm sheets. Said sheets were fried in 170°C palm oil for 2 min.. scooped out, fried in 240°C palm oil immediately for 2 min., scooped out and dripped off oil, seasoning material to be replenished was sprayed on the sheets described above. The obtained sheets were packed and sealed to form the finished product.

### Example 2

1 Kg millet, 1 Kg milk, 20 g palm oil, 5 g salt, 10 g granulated sugar and appropriate amount of seasoning material were blended thoroughly, and then put in a steaming tray, steamed at 1 Kg pressure for 20 min.. The material was taken out from the tray and cooled to 20 °C, appropriate amount of bulking agent was added. After blend uniformly said materials was put into a twin roller press for pressing once or twice times into 1.5mm thick belt. An animal figured mound was used to die into animal shape sheets. Said sheets were fried in 150 °C palm oil for 3 min. When they appeared slight yellowish, the sheets were scooped out at once and fried in 250 °C palm oil immediately for 2 min., scooped out at once, dripped off oil, the seasoning material was sprayed on the surface of the fried sheets. Said sheets were packed and sealed to form a finished product.

### Example 3

500g rice, 500g foxtail millet, 100g dry powder of red radish after washing were added in 1 Kg water, 20 g rapeseed oil, 5 g salt, 10 g granulated sugar and appropriate quantity of seasoning material were also applied therein to blend thoroughly. Then the mixture above was put in a steaming tray, steamed under 1 Kg pressure for 20 min. The cooked material was taken out for cooling to 25°C. Appropriate quantity of bulking agent was blended uniformly in the mixture and then obtained mixture was put in a twin roller press for pressing once or twice times into 1 mm thick belt which then was cut into 20x20mm thin sheets. Said sheets were fried in 150°C rapeseed oil for 2 min, scooped out, fried in 230°C rapeseed oil immediately for 2 min until the sheets exhibited ideal yellow color. The fried sheets were scooped out and replenished with seasoning material.

### Example 4

1 Kg millet, 50 g steamed and deskined yam, 80 g washed and roasted sesame were put into 1 Kg. water and 20g peanut oil, 5 g salt, 10 g granulated sugar and appropriate quantity of seasoning material were also used for preparing a well-blended mixture. Said mixture was placed in a steaming tray for steaming under 1 atm. for 20 min., the ripened material was taken out for cooling to 15°C, appropriate amount of bulking agent was blended in the material, which was pressed once or twice in a twin roller press to 1mm thick belt. The obtained belt was cut into 18x18 mm thin sheets which were then fried in 170°C peanut oil for 2 min. until the sheets material floated up and exhibited slight yellowish, they were scooped out and dripped off oil. The fried sheets were fried again in 250°C peanut oil for 1 min and scooped out quickly, dripped off oil, and sprayed with the replenished seasoning to form the finished product.

### Example 5

1 Kg rice, 60 g walnut, 60 g peanut, and 30 g lotus seed were used. The peanut, walnut and lotus seed were impregnated with water and deskined and cut before use. 1 Kg water, 20 g palm oil, 5 g salt, 1g granulated sugar were added into the above mentioned material, and appropriate amount of seasoning were blended uniformly and the well-blended mixture was put in steaming tray, cooked under 1 atm. steam ing for 25 min. The steamed material was taken out, appropriate bulking agent was mixed with the steamed material uniformly. The well-mixed material was pressed once or twice in a twin roller press to form 0.8-1 mm thick belt which then was pressed in a mould to form 20mm diameter figured pieces. These pieces were fried in 150 °C palm oil for 3 min, scooped out and dripped off oil, finally sprayed on with the seasoning used in the present invention.

### Example 6

1 Kg rice, 100g chopped beef were mixed well, 1 kg sparerib broth, 20 g palm oil, 5 g salt, 10 g granulated sugar, and appropriate amount of seasoning were added therein. The above blended materials were put in steaming tray, and cooked under 1 kg pressure for 20 min. The obtained steamed material was taken out for cooling to 20 °C. After bulking agent was added and mixed evenly, the material was pressed or twice times in the roller press to form 1.2 mm thin belt,. This belt was cut into 30 x10mm small pieces, after frying in 160 °C palm oil for 2 min, the pieces were scooped out and dripped off oil and sprayed on appropriate amount of seasoning materials. A fried food of the present invention was obtained finally.

### Example 7

1 Kg rice was scooped out after impregnated in tea for 40 min, 100 g red bean was put into 500g water for boiling 30 min, scooped out and dripped off water. The tea-impregnated rice, cooked red bean and 60 g soybean protein were blended thoroughly in 400 g water. In addition, 20 g palm oil, 50 g salt, 10 g granulated sugar and appropriate seasoning were used. The all materials as mentioned above were put in the steaming tray for cooking under 1 Kg steam pressure for 20 min. They were taken out and cooled to 15-20 °C. The steamed material was pressured in a roller press twice times to form 1 mm thick rice belt. Said belt was cut into 20x20mm small pieces. After fried in 180°C palm oil for 2 min, the pieces were scooped out and dripped off oil, and fried again in 250°C palm oil for 3 min. The obtained pieces was sprayed with appropriate amount of seasoning and 100g vitamin C to prepare a final product. In the fried food produced according to this method, the protein content is up to 13.6%, about double of the ordinary steamed rice, and vitamin C is replenished which is not present in the ordinary steamed rice.

## Claims

1. A method for making fried food containing mainly rice grains, which method comprises:
a) pretreating raw material in order to eliminate impurities, skins, kernels and deteriorated parts therein,
b) steaming said raw material to which a certain amount of seasonings is added such that the weight ratio of rice in said raw material to liquid is 1 : 1 to 1.5,
c) blending an appropriate amount of bulking agent with said ripened rice,
d) shaping said ripened rice to individual pieces and
e) frying said shaped rice pieces at least twice at different temperatures, the first frying temperture is in the range of 150 to 180 °C and the second frying temperature is in the range of 180 to 250 °C.

2. The method according to claim 1, wherein said raw material contains one or more components selected from the group consisting of rice grains, such as rice corn, glutinuous rice, millet or foxtail millet, sorghum, jobstears seed, black rice, husked sorghum and the like and the mixtures thereof; beans such as hyuacinth bean, red bean, green bean and the like, bean paste thereof and the mixtures thereof; fruits, nuts and their products, such as banana, jujube, longan flesh, leechee flesh, walnut, peanut, lotus seed and the like and the mixtures thereof; vegetables such as spinash, radish and fungus, such as mushroom, jew's ear, and the like and the mixtures thereof; poultry and animal meat, such as hen egg, chicken meat, beef, fish, flesh and the like and the mixtures thereof.

3. The method according to claim 1, wherein said liquid includes water, milk, food extracts, tea, vegetable juice and fruit juice.

4. The method according to claim 1, wherein said raw material used before cooking is pre-impregnated with said milk, food extracts or the liquid containing seasonings.

5. The method according to claim 1, wherein the amount of edible oil, salt, granulated sugar or honey added to the raw material before the steaming is in an amount of 0.5-1%, 0.01-2% and 0.1-2% by weight, respectively, based on the total weight of the raw material.

6. The method according to claim 1, wherein said seasoning includes any kind of natural or synthetic seasoning, such as salt, sugar, honey, wine, beef extract, ginger, curry, prickleyash, hot pepper, aniseed, clove, cumin and the mixtures thereof and sodium glutamate.

7. The method according to claim 6, wherein the particle size of the seasoning material is 50-500 ».

8. The method according to claim 7, wherein the seasoning material in size of 50-500 » and/or the vitamin, trace elements required by the human body are applied on the fried pieces directly.

9. A fried rice food produced by the method of any of the preceeding claims.

## Patentansprüche

1. Verfahren zur Herstellung von gebratenen Lebensmittel, das hauptsächlich Reiskörner enthält, bei dem
a) Rohmaterial vorbehandelt wird, um Verunreinigungen, Häute/Schalen, Kerne und schlecht gewordene Teile darin zu entfernen,
b) das Rohmaterial, dem eine bestimmte Menge Gewürze zugesetzt worden ist, so mit Dampf behandelt wird, daß das Gewichtsverhältnis von Reis in dem Rohmaterial zur Flüssigkeit 1 : 1 bis 1,5 beträgt,
c) eine geeignete Menge Füllstoff (Bulkingmittel) mit dem gegarten Reis gemischt wird,
d) der gegarte Reis zu individuellen Stücken geformt wird und
e) die geformten Reisstücke mindestens zweimal bei verschiedenen Temperaturen gebraten werden, wobei die erste Brattemperatur im Bereich von 150 bis 180° C liegt und die zweite Brattemperatur im Bereich von 180 bis 250° C liegt.

2. Verfahren nach Anspruch 1, bei dem das Rohmaterial eine oder mehrere Komponenten ausgewählt aus der Gruppe bestehend aus Reiskörnern wie Reiskorn, klebriger Reis, Hirse oder Fuchsschwanzhirse, Sorghum, Job's Tears-Samen, schwarzer Reis, geschältes Sorghum und dergleichen sowie Mischungen derselben, Bohnen wie Hyanzinth-Bohnen, rote Bohnen, grüne Bohnen und dergleichen, Bohnenpaste daraus sowie Mischungen derselben, Früchten, Nüssen und deren Produkten wie Bananen, Jojoba, Longanfleisch, Leecheefleisch, Walnüssen, Erdnüssen, Lotossamen und dergleichen sowie Mischungen derselben, Gemüse wie Spinat, Rettich und Pilzen wie Champignons, Judenohr und dergleichen sowie Mischungen derselben, Geflügel und tierischem Fleisch wie Hühnereiern, Hühnchenfleisch, Rindfleisch, Fischfleisch und dergleichen sowie Mischungen derselben enthält.

3. Verfahren nach Anspruch 1, bei dem die Flüssigkeit Wasser, Milch, Lebensmittelextrakte, Tee, Gemüsesaft oder Fruchsaft einschließt.

4. Verfahren nach Anspruch 1, bei dem das verwendete Rohmaterial vor dem Kochen mit der Milch, Lebensmittelextrakt oder der Gewürze enthaltenden Flüssigkeit vorimprägniert wird.

5. Verfahren nach Anspruch 1, bei dem die Menge an Speiseöl, Salz, granuliertem Zucker oder Honig, die dem Rohmaterial vor der Dampfbehandlung zugesetzt wird, bezogen auf Gesamtgewicht des Rohmaterials 0,5 bis 1 Gew.-%, 0,01 bis 2 Gew.-% bzw. 0,1 bis 2 Gew.-% beträgt.

6. Verfahren nach Anspruch 1, bei dem das Gewürze jede Art von natürlichem oder synthetischem Gewürz umfaßt wie Salz, Zucker, Honig, Wein, Rindextrakt, Ingwer, Curry, Prickley Ash, heißer Pfeffer, Anissamen, Nelken, Kümmel und Mischungen derselben sowie Natriumglutamat.

7. Verfahren nach Anspruch 6, bei dem die Teilchengröße des Gewürzmaterials 50 bis 500 »m beträgt.

8. Verfahren nach Anspruch 7, bei dem das Gewürzmaterial mit einer Größe von 50 bis 500 »m und/oder das Vitamin sowie vom menschlichen Körper benötigte Spurenelemente direkt auf die gebratenen Stücke aufgebracht werden.

9. Gebratenes Reislebensmittel hergestellt nach dem Verfahren gemäß einem der vorhergehenden Ansprüche.

## Revendications

1. Procédé de préparation d'aliment frit contenant principalement des grains de riz, lequel procédé comprend :
a) le prétraitement de la matière première afin d'éliminer les impuretés, les épidermes, les coeurs et les parties détériorées,
b) la cuisson à la vapeur de ladite matière première à laquelle on ajoute une certaine quantité d'assaisonnements de sorte que le rapport en masse du riz dans ladite matière première au liquide est de 1:1 à 1,5,
c) le mélange d'une quantité appropriée de diluant avec ledit riz mûri,
d) la mise en forme dudit riz mûri en morceaux individuels et
e) la friture desdits morceaux de riz façonnés au moins deux fois à des températures différentes, la première température de friture étant comprise entre 150 et 180°C et la seconde température de friture entre 180 et 250°C.

2. Procédé selon la revendication 1, dans lequel ladite matière première contient un ou plusieurs composants choisis dans le groupe constitué par des grains de riz, tel que riz individuel, riz gluant, millet ou millet à grappe, sorgho, graine de Job's tears, riz noir, sorgho épluché et équivalent et leurs mélanges; des haricots tels que haricots hyacinthe, haricots rouges, haricots verts et équivalent, leur pâte de haricots et leurs mélanges; des fruits, des noix et leurs produits tels que banane, jujube, chair de longame, chair de litchi, noix, arachide, graine de jujubier et équivalent et leurs mélanges; des légumes tels qu'épinard, radis et champignons tels que champignon de couche, hirnéole et équivalent et leurs mélanges; la volaille et la chair animale telles qu'oeuf de poule, chair de poulet, boeuf, chair de poisson et équivalent et leurs mélanges.

3. Procédé selon la revendication 1, dans lequel ledit liquide comprend de l'eau, du lait, des extraits d'aliments, du thé, du jus de légume et du jus de fruit.

4. Procédé selon la revendication 1, dans lequel on préimprègne ladite matière première utilisée avant cuisson par ledit lait, lesdits extraits d'aliments ou par le liquide contenant des assaisonnements.

5. Procédé selon la revendication 1, dans lequel les quantités d'huile comestible, de sel, de sucre en poudre ou de miel ajoutées à la matière première avant la cuisson à la vapeur correspondent respectivement à une quantité comprise entre 0,5 et 1 %, 0,01 et 2 % et 0,1 et 2 % en masse par rapport à la masse totale de matière première.

6. Procédé selon la revendication 1, dans lequel ledit assaisonnement comprend toute variété d'assaisonnement naturel ou synthétique tel que sel, sucre, miel, vin, extrait de boeuf, gingembre, curry, xanthoxylum, piment, anis, clou de girofle, cumin et leurs mélanges et glutamate de sodium.

7. Procédé selon la revendication 6, dans lequel la dimension de particule de la matière d'assaisonnement est comprise entre 50 et 500 »m.

8. Procédé selon la revendication 7, dans lequel on applique directement sur les morceaux frits la matière d'assaisonnement d'une dimension de 50 à 500 »m et/ou les vitamines, les oligo-éléments nécessaires à l'organisme humain.

9. Aliment frit à base de riz fabriqué par le procédé de l'une quelconque des revendications précédentes.
